# EUROPÄISCHE PATENTANMELDUNG

(11) **EP 4 498 462 A1**
(43) Veröffentlichungstag der Anmeldung: **29.01.2025**
(21) Anmeldenummer: 23188393.5
(22) Anmeldetag: 28.07.2023
(51) Int. Cl.: H01M 10/04, H01M 50/534, H01M 50/536, H01M 50/547

(54) **ELEKTRODEN-SEPARATOR-VERBUND FÜR EIN ELEKTROCHEMISCHES ENERGIESPEICHERELEMENT**

(71) Anmelder: VARTA Microbattery GmbH, 73479 Ellwangen Jagst (DE)
(72) Erfinder: Ensling, David, 73479 Ellwangen (DE); Hald, Rainer, 73479 Ellwangen (DE); Hoefling, Alexander, 89075 Ulm (DE); Rueß, Raffael, 73479 Ellwangen (DE); Schimmele, Jonathan, 73489 Jagstzell (DE)
(74) Vertreter: Ostertag & Partner Patentanwälte mbB

(57) **Zusammenfassung**

Ein Elektroden-Separator-Verbund (104) für ein elektrochemisches Energiespeicherelement (100) umfasst als Elektroden mindestens eine Anode (105) und mindestens eine Kathode (108) sowie mindestens einen Separator (116) oder mindestens einen Festelektrolyten mit der Sequenz Anode (105) / Separator (116) oder Festelektrolyt / Kathode (108). Die Anode (105) umfasst einen Anodenstromkollektor (106), die Kathode (108) umfasst einen Kathodenstromkollektor (109). Bei den Stromkollektoren (106, 109) handelt es sich um dünne, elektrisch leitende Substrate, die eine Oberseite, eine Unterseite und einen Rand (106a) aufweisen. Der Anodenstromkollektor (106) und/oder der Kathodenstromkollektor umfassen einen Hauptbereich (106c, 109c), der beidseitig mit einer Schicht aus negativem Elektrodenmaterial (107) oder positivem Elektrodenmaterial (110) beladen ist, sowie einen Randbereich (106b, 109b), der sich streifenförmig entlang des Rands (106a, 109a) erstreckt und der nicht mit dem jeweiligen Elektrodenmaterial beladen ist. Der Verbund (104) weist eine Seite (104a oder 104b) auf, aus der der Rand (106a) des Anodenstromkollektors (106) oder der Rand (109a) des Kathodenstromkollektors (108) austritt. Der sich entlang des aus der Seite (104a oder 104b) austretenden Rands (106a oder 109a) erstreckende Randbereich (106b, 109b) ist teilweise oder vollständig mit einer elektrisch nichtleitenden Schicht aus einem Stützmaterial (133) beschichtet. Die Elektrode, deren Stromkollektor den aus der Seite (104a oder 104b) austretenden Rand (106a oder 109a) umfasst, weist in dem Hauptbereich ihres Stromkollektors eine erste mittlere Dicke D1 und in dem mit der Schicht aus dem Stützmaterial (133) beschichteten Randbereich eine maximale Dicke D2 auf. Dabei ist D2 < D1.

## Beschreibung

### ANWENDUNGSGEBIET UND STAND DER TECHNIK

Die nachstehend beschriebene Erfindung betrifft einen Elektroden-Separator-Verbund für ein elektrochemisches Energiespeicherelement und ein elektrochemisches Energiespeicherelement.

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, zwischen denen ein Separator angeordnet ist. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht. Der Separator verhindert somit einen unmittelbaren Kontakt der Elektroden. Gleichzeitig ermöglicht er aber einen elektrischen Ladungsausgleich zwischen den Elektroden.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entlade-funktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Ein-satz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein.

Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen meist Lösungen von Lithiumsalzen wie Lithiumhexafluorophosphat (LiPF₆) in organischen Lösungsmitteln (z. B. Ether und Ester der Kohlensäure).

Die Kompositelektroden werden im Allgemeinen bei der Herstellung einer Lithium-Ionen-Zelle mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf, wie z.B. in elektrischen Werkzeugen, werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm). Zellen dieser Art umfassen stets einen Verbundkörper in Form eines Wickels. Moderne Lithium-Ionen-Zellen dieses Formfaktors können eine Energiedichte von bis zu 270 Wh/kg erreichen.

In der WO 2017/215900 A1 sind zylindrische Rundzellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle ein Kontaktblechteil auf, das auf einer Stirnseite des Wickels aufsitzt und mit einem Längsrand eines der Stromkollektoren durch Verschweißung verbunden ist. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen und auch Wärme kann besser aus dem Wickel abgeführt werden.

Problematisch ist bei den in der WO 2017/215900 A1 beschriebenen Zellen allerdings, dass es sehr schwierig ist, die Längsränder und die Kontaktblechteile miteinander zu verschweißen. Im Verhältnis zu den Kontaktblechteilen weisen die Stromkollektoren der Elektroden eine ausgesprochen geringe Dicke auf. Der Randbereich der Stromkollektoren ist daher mechanisch außerordentlich empfindlich und kann während der Schweißvorgangs unbeabsichtigt deformiert oder niedergeschmolzen werden. Weiterhin kann es beim Anschweißen der Kontaktblechteile zu einem Schmelzen von Separatoren des Elektroden-Separator-Verbunds kommen. In Extremfällen können hieraus Kurzschlüsse resultieren.

Aus der WO 2020/239512 A1 ist es bekannt, die Oberflächen von Stromkollektoren randständig mit einem Stützmaterial zu beschichten, das thermisch beständiger als die damit beschichtete Oberfläche ist. Ein solches Stützmaterial kann den Randbereich von Stromkollektoren stabilisieren und isoliert die Stromkollektoren in einem besonders kritischen Bereich.

Aus der US 2020/0144676 A1 ist es ebenfalls bekannt, den Randbereich von Stromkollektoren mit einem keramischen Material zu beschichten.

### AUFGABE UND LOSUNG

Der vorliegenden Erfindung lag die Aufgabe zugrunde, Energiespeicherelemente bereitzustellen, die sich durch eine hohe Energiedichte auszeichnen. Insbesondere lag der Erfindung die Aufgabe zugrunde, die in der WO 2020/239512 A1 beschriebenen Lösungen weiter zu verbessern.

Diese Aufgabe wird durch den Elektroden-Separator-Verbund mit den Merkmalen des Anspruchs 1 gelöst. Auch das Energiespeicherelement mit den Merkmalen des Anspruchs 9 und das Verfahren mit den Merkmalen des Anspruchs 11 sind Gegenstand der Erfindung. Bevorzugte Ausführungsformen der Erfindung finden sich in den abhängigen Ansprüchen 2 bis 8, 10 und 12.

Der Elektroden-Separator-Verbund ist zur Verwendung in einem Energiespeicherelement, welches den Elektroden-Separator-Verbund in einem Gehäuse umfasst, vorgesehen. Er zeichnet sich durch die folgenden Merkmale aus:
a. Der Verbund umfasst als Elektroden mindestens eine Anode und mindestens eine Kathode sowie mindestens einen Separator oder mindestens einen Festelektrolyten mit der Sequenz Anode / Separator oder Festelektrolyt / Kathode.
b. Die Anode umfasst einen Anodenstromkollektor, bei dem es sich um ein dünnes, elektrisch leitendes Substrat handelt, das eine Oberseite, eine Unterseite und einen Rand aufweist.
c. Die Kathode umfasst einen Kathodenstromkollektor, bei dem es sich um ein dünnes, elektrisch leitendes Substrat handelt, das eine Oberseite, eine Unterseite und einen Rand aufweist.
d. Der Anodenstromkollektor umfasst einen Hauptbereich, der beidseitig mit einer Schicht aus negativem Elektrodenmaterial beladen ist, sowie einen Randbereich, der sich streifenförmig entlang des Rands erstreckt und der nicht mit dem negativen Elektrodenmaterial beladen ist,
   und/oder
   der Kathodenstromkollektor umfasst einen Hauptbereich, der beidseitig mit einer Schicht aus positivem Elektrodenmaterial beladen ist, sowie einen Randbereich, der sich streifenförmig entlang des Randes erstreckt und der nicht mit dem positiven Elektrodenmaterial beladen ist.
e. Der Verbund weist eine Seite auf, aus der der Rand des Anodenstromkollektors oder der Rand des Kathodenstromkollektors austritt.
f. Der sich entlang des aus der Seite austretenden Rands erstreckende Randbereich ist teilweise oder vollständig mit einer elektrisch nichtleitenden Schicht aus einem Stützmaterial beschichtet.
g. Die Elektrode, deren Stromkollektor den aus der Seite austretenden Rand umfasst, weist in dem Hauptbereich ihres Stromkollektors eine erste mittlere Dicke D1 und in dem mit der Schicht aus dem Stützmaterial beschichteten Randbereich eine maximale Dicke D2 auf.
h. D2 < D1.

Durch das Merkmal h. in Verbindung mit dem Merkmal g. ist gewährleistet, dass es innerhalb des Elektroden-Separator-Verbunds im Bereich der mit dem Stützmaterial beschichteten Randbereichen keine Probleme gibt. Wenn eine Elektrode im Bereich des mit dem Stützmaterial beschichteten Randbereichs dicker ist als in dem mit dem Elektrodenmaterial beladenen Hauptbereich, kann das mechanische Spannungen verursachen, da sich, beispielsweise im Fall von spiralförmig gewickelten Elektroden, die erhöhten Dicken addieren können.

Die genannte mittlere Dicke D1 lässt sich durch Dickenmessungen bestimmen. Hierzu werden entlang eines senkrecht zu dem streifenförmigen Randbereich durch den mit dem Elektrodenmaterial beschichteten Hauptbereich geführten Schnitts an mehreren Messpunkten Dickenmessungen vorgenommen. Die Messergebnisse werden addiert und durch die Anzahl der Messungen dividiert, um D1 zu erhalten. Bevorzugt werden mindestens sechs Messungen an sechs Messpunkten vorgenommen. Es ist dabei weiter bevorzugt, dass zwei endständige Messpunkte jeweils 2 mm Abstand zu den beiden Enden des Schnitts haben und die übrigen Messpunkte die Strecke zwischen den beiden endständigen Messpunkten in gleiche Abstände unterteilen.

Der "Schnitt" ist hierbei vorzugsweise kein mechanischer Schnitt. Es ist vielmehr bevorzugt, die Bestimmung der mittleren Dicke anhand von Schnittbildern durchzuführen, die mittels CT-Analysen (Computertomographie) gewonnen werden können. Damit lassen sich selbst Elektroden untersuchen, die Bestandteil eines in einem geschlossenen Metallgehäuse befindlichen Elektroden-Separator-Verbunds sind.

Bezüglich der Beschichtung mit dem Stützmaterial gibt es vier besonders bevorzugte Varianten der Erfindung.

Variante 1 zeichnet sich durch mindestens eines der folgenden Merkmale a. bis c. aus:
a. Der sich entlang des aus der Seite austretenden Rands erstreckende Randbereich ist teilweise mit der Schicht aus dem Stützmaterial beschichtet.
b. Der sich entlang des aus der Seite austretenden Rands erstreckende Randbereich ist unterteilt in einen ersten streifenförmigen Teilbereich, der frei von dem Stützmaterial ist, einen zweiten streifenförmigen Teilbereich, der beidseitig mit dem Stützmaterial beschichtet ist, und einen dritten streifenförmigen Teilbereich, der ebenfalls frei von dem Stützmaterial ist.
c. Der dritte streifenförmige Teilbereich ist ein endständiger streifenförmigen Teilbereich und der erste streifenförmige Teilbereich grenzt unmittelbar an den Hauptbereich des Stromkollektors an und der zweite Teilbereich trennt den ersten streifenförmigen Teilbereich von dem zweiten streifenförmigen Teilbereich.

Bevorzugt sind die unmittelbar vorstehenden Merkmale a. bis c. in Kombination realisiert.

Variante 2 zeichnet sich durch mindestens eines der folgenden Merkmale a. bis c. aus:
a. Der sich entlang des aus der Seite austretenden Rands erstreckende Randbereich ist teilweise mit der Schicht aus dem Stützmaterial beschichtet.
b. Der sich entlang des aus der Seite austretenden Rands erstreckende Randbereich ist unterteilt in einen ersten streifenförmigen Teilbereich, der beidseitig mit dem Stützmaterial beschichtet ist, und einen zweiten streifenförmigen Teilbereich, der frei von dem Stützmaterial ist.
c. Der zweite streifenförmige Teilbereich ist ein endständiger streifenförmiger Teilbereich und der erste streifenförmige Teilbereich grenzt unmittelbar an den Hauptbereich des Stromkollektors an und trennt den Hauptbereich von dem zweiten streifenförmigen Teilbereich.

Bevorzugt sind die unmittelbar vorstehenden Merkmale a. bis c. in Kombination realisiert.

Variante 3 zeichnet sich durch mindestens eines der folgenden Merkmale a. bis c. aus:
a. Der sich entlang des aus der Seite austretenden Rands erstreckende Randbereich ist vollständig mit der Schicht aus dem Stützmaterial beschichtet.
b. Der sich entlang des aus der Seite austretenden Rands erstreckende Randbereich ist beidseitig mit der Schicht aus dem Stützmaterial beschichtet.

Bevorzugt sind die unmittelbar vorstehenden Merkmale a. und b. in Kombination realisiert.

Variante 4 zeichnet sich durch mindestens eines der folgenden Merkmale a. bis d. aus:
a. Der sich entlang des aus der Seite austretenden Rands erstreckende Randbereich ist teilweise mit der Schicht aus dem Stützmaterial beschichtet.
b. Der sich entlang des aus der Seite austretenden Rands erstreckende Randbereich ist unterteilt in einen ersten streifenförmigen Teilbereich, der beidseitig mit dem Stützmaterial beschichtet ist, und einen zweiten streifenförmigen Teilbereich, der frei von dem Stützmaterial ist.
c. Der zweite streifenförmige Teilbereich ist ein endständiger streifenförmiger Teilbereich und der erste streifenförmige Teilbereich grenzt unmittelbar an den Hauptbereich des Stromkollektors an und trennt den Hauptbereich von dem zweiten streifenförmigen Teilbereich.
d. Der Hauptbereich ist teilweise oder vollständig mit der elektrisch nichtleitenden Schicht aus dem Stützmaterial beschichtet.

Bevorzugt sind die unmittelbar vorstehenden Merkmale a. und b. in Kombination realisiert.

Der Elektroden-Separator-Verbund kann eine zylindrische oder im Wesentlichen zylindrische Form oder eine prismatische oder im Wesentlichen prismatische Form aufweisen.

Wenn er eine zylindrische oder im Wesentlichen zylindrische Form aufweist, zeichnet er sich bevorzugt durch mindestens eines der unmittelbar folgenden Merkmale a. bis g. aus:
a. Der Elektroden-Separator-Verbund hat die Form eines Wickels und umfasst die Anode und die Kathode und den mindestens einen Separator oder die mindestens eine Schicht aus dem Festelektrolyten in jeweils bandförmiger Form sowie spiralförmig gewickelt.
b. Der wickelförmige Elektroden-Separator-Verbund weist eine erste und eine zweite Stirnseite und einen dazwischen liegenden Wickelmantel auf.
c. Der Anodenstromkollektor ist bandförmig ausgebildet und umfasst parallel nebeneinander seinen Hauptbereich und den Randbereich, wobei der Hauptbereich wie der Randbereich streifenförmig ausgebildet ist.
d. Der Kathodenstromkollektor ist bandförmig ausgebildet und umfasst parallel nebeneinander seinen Hauptbereich und den Randbereich, wobei der Hauptbereich wie der Randbereich streifenförmig ausgebildet ist.
e. Aus einer der Stirnseiten tritt der Rand des Anodenstromkollektors aus, und aus der anderen der Stirnseiten der Rand des Kathodenstromkollektors.
f. An der ersten und/oder der zweiten Stirnseite ist ein metallisches Kontaktblechteil fixiert.
g. Das metallische Kontaktblechteil oder die metallischen Kontaktblechteile sind mit dem aus der jeweiligen Stirnseite austretenden Rand oder den aus der jeweiligen Stirnseite austretenden Rändern verschweißt.

Bevorzugt sind die unmittelbar vorstehenden Merkmale a. und e. in Kombination realisiert. Besonders bevorzugt zeichnet sich der Elektroden-Separator-Verbund durch die Merkmale a. bis f. oder die Merkmale a. bis g. aus.

Bei der Seite, aus der der Rand des Anodenstromkollektors oder der Rand des Kathodenstromkollektors austritt, handelt es sich bei zylindrischer Ausbildung des Elektroden-Separator-Verbunds also um die erste oder die zweite Stirnseite. Bei dem Rand des Anodenstromkollektors gemäß unmittelbar vorstehendem Merkmal e. handelt es sich um einen Längsrand der Anodenstromkollektors. Und bei dem Rand des Kathodenstromkollektors gemäß unmittelbar vorstehendem Merkmal e. handelt es sich um einen Längsrand der Kathodenstromkollektors.

Die spiralförmig gewickelten Elektrodenbänder und das mindestens eine Separatorband weisen in typischen Fällen bevorzugt die folgenden Dimensionen auf:
- Eine Länge im Bereich von 0,5 m bis 25 m
- Eine Breite im Bereich 40 mm bis 145 mm

Zur Herstellung eines gewickelten Elektroden-Separator-Verbunds aus Elektrodenbändern und mindestens einem bandförmigen Separator werden die bandförmigen Elektroden und der mindestens eine Separator in der Regel einer Wickelvorrichtung zugeführt und in dieser bevorzugt um eine Wickelachse herum spiralförmig aufgewickelt. Eine Verklebung der Elektroden und der Separatoren oder eine Kontaktierung bei erhöhten Temperaturen ist hierbei meist nicht erforderlich. In einigen Ausführungsformen werden die Elektroden und der mindestens eine Separator auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

Wenn der Elektroden-Separator-Verbund eine im Wesentlichen prismatische Form aufweist, zeichnet er sich bevorzugt durch mindestens eines der unmittelbar folgenden Merkmale a. bis f. aus:
a. Der Elektroden-Separator-Verbund umfasst mehrere Anoden und mehrere Kathoden in gestapelter Form, wobei in dem Stapel benachbarte Elektroden entgegengesetzter Polarität durch den mindestens einen Separator oder die mindestens eine Schicht aus dem Festelektrolyten getrennt sind.
b. Die Anodenstromkollektoren der Anoden umfassen jeweils den Hauptbereich, der beidseitig mit einer Schicht aus dem negativen Elektrodenmaterial beladen ist, sowie den Randbereich, der sich streifenförmig entlang des Rands erstreckt und der nicht mit dem negativen Elektrodenmaterial beladen ist.
c. Die Kathodenstromkollektoren der Kathoden umfassen jeweils den Hauptbereich, der beidseitig mit einer Schicht aus dem positivem Elektrodenmaterial beladen ist, sowie den Randbereich, der sich streifenförmig entlang des Randes erstreckt und der nicht mit dem positiven Elektrodenmaterial beladen ist.
d. Der Stapel ist prismatisch ausgebildet und weist eine erste Seite auf, aus der die Ränder der Anodenstromkollektoren austreten, und eine zweite Seite, aus der die Ränder der Kathodenstromkollektoren austreten.
e. An der ersten und/oder der zweiten Seite ist ein metallisches Kontaktblechteil fixiert.
f. Das metallische Kontaktblechteil oder die metallischen Kontaktblechteile sind mit den aus der jeweiligen Seite austretenden Rändern verschweißt.

Bevorzugt sind die unmittelbar vorstehenden Merkmale a. und d. in Kombination realisiert. Besonders bevorzugt zeichnet sich der Elektroden-Separator-Verbund durch die Merkmale a. bis e. oder die Merkmale a. bis f. aus.

Bei dem im Wesentlichen prismatischen Elektroden-Separator-Verbund können die Stromkollektorränder der positiven und der negativen Elektroden auch aus mehr als einer Seite des Elektroden-Separator-Verbunds austreten. Beispielsweise kann es vorgesehen sein, dass positive Elektroden mit rechteckiger Grundform jeweils zwei nicht mit Elektrodenmaterial beladene streifenförmige, entlang einem Rand des jeweiligen Stromkollektors sich erstreckende Randbereiche aufweisen, die aus zwei benachbarten Seiten des Elektroden-Separator-Verbunds austreten. In diesem Fall kann das Kontaktblechteil beispielsweise L-förmig ausgebildet sein und auf beiden Seiten, aus denen die jeweiligen Ränder austreten, aufliegen. Oder es können zwei Kontaktblechteile verwendet werden.

Im Falle der prismatischen Form umfasst der Elektroden-Separator-Verbund bevorzugt eine Vielzahl von Elektroden mit einer rechteckigen Grundform.

Weiterhin kann der Elektroden-Separator-Verbund auch als Flachwickel mit spiralförmig aufgewickelten bandförmigen Elektroden gebildet sein und eine im Wesentlichen prismatische Form aufweisen.

Bei den Elektroden handelt es sich im Übrigen bevorzugt um Kompositelektroden, welche elektrochemisch aktive Komponenten und elektrochemisch inaktive Komponenten umfassen und deren grundsätzlicher Aufbau im einleitenden Teil bereits erläutert wurde.

Die Stromkollektoren dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Im Falle von Elektrodenmaterialien für Lithium-lonen-Zellen eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle von Lithium-Ionen-Zellen insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AISiMg, AlSiCu, AlCuTiMg und AlMg. Der Aluminiumanteil besagter Legierungen liegt bevorzugt oberhalb von 99,5 %.

Bevorzugt handelt es sich bei dem Anodenstromkollektor und/oder dem Kathodenstromkollektor jeweils um eine Metallfolie mit einer Dicke im Bereich von 4 µm bis 30 µm.

Neben Folien können als Stromkollektoren allerdings auch andere Substrate wie metallische oder metallisierte Vliese oder offenporige metallische Schäume oder Streckmetalle verwendet werden.

Die Separatoren werden bevorzugt aus einer elektrisch isolierenden Kunststofffolie gebildet. Diese weist bevorzugt Poren auf, so dass sie von dem flüssigen Elektrolyten durchdrungen werden kann. Die Kunststofffolie kann beispielsweise aus einem Polyolefin oder aus einem Polyetherketon bestehen. Aber auch Vliese und Gewebe aus Kunststoffmaterialien oder andere elektrisch isolierende Flächengebilde können als Separator zum Einsatz kommen.

Bevorzugt werden Separatoren eingesetzt, die eine Dicke im Bereich von 5 bis 50 µm aufweisen.

Die Separatoren sind bevorzugt getränkt mit einem geeigneten Elektrolyten, wie auch die Elektroden.

Insbesondere im Fall des prismatischen Elektroden-Separator-Verbunds können an Stelle von Separatoren auch Schichten aus dem erwähnten Festelektrolyten zum Einsatz kommen. Ein Festelektrolyt weist eine intrinsische lonenleitfähigkeit auf und muss nicht mit einem flüssigen Elektrolyten getränkt werden. Bei dem Festelektrolyten kann es sich beispielsweise um einen Polymerfestkörperelektrolyten basierend auf einem Polymer-Leitsalzkomplex, der einphasig ohne jegliche Flüssigkomponente vorliegt, handeln. Als Polymermatrix kann ein Polymerfestkörperelektrolyt Polyacrylsäure (PAA), Polyethylenglycol (PEG) oder Polymethylmethacrylat (PMMA) aufweisen. In diesen können Lithium-Leitsalze wie beispielsweise Lithium-bis-(trifluormethan)sulfonylimid (LiTFSI), Lithiumhexafluorophosphat (LIPF₆) und Lithiumtetrafluoroborat (LIBF₄) vorliegen.

Es ist bevorzugt, dass die Seiten der Elektroden-Separator-Verbünde, aus denen der Rand oder die Ränder, entlang denen sich der streifenförmige Randbereich erstreckt, austreten, von den Rändern der Separatoren oder Festelektrolyten-Schichten gebildet werden. Ist beispielsweise zwischen entgegengesetzt gepolten bandförmigen Elektroden eines gewickelten, zylindrisch ausgebildeten Elektroden-Separator-Verbunds ein bandförmiger Separator angeordnet, so bildet ein Längsrand dieses Separators eine Stirnseite des zylindrisch ausgebildeten Elektroden-Separator-Verbunds. In der Regel sind die Abstände zwischen benachbarten Windungen des Wickels sehr klein. Der Längsrand spannt im Idealfall eine plane Ebene auf, aus der der Längsrand eines der Stromkollektoren austritt.

Im Hinblick auf die Elektrochemie ist das erfindungsgemäße Elektroden-Separator-Verbund nicht auf einen bestimmten Zellentyp beschränkt. In besonders bevorzugten Ausgestaltungen ist oder umfasst er Elektroden auf Lithium-Ionen-Basis. In alternativen Ausführungsformen ist oder umfasst er Elektronen auf Basis von Natrium-Ionen-, Kalium-Ionen-, Calcium-Ionen-, Magnesium-Ionen- oder Aluminium-lonen-Technologie. Unter diesen Alternativen sind Elektroden mit Natrium-Ionen-Zellchemie besonders bevorzugt.

Zellen mit Lithium-Ionen-Technologie basieren bekanntlich auf dem Einsatz von Lithium, welches in Form von Ionen zwischen den Elektroden eines Energiespeicherelements hin und her wandern kann.

Als elektrochemisch aktive Komponenten (Aktivmaterialien) für die Elektroden von Lithium-lonen-Zellen kommen grundsätzlich sämtliche Materialien in Frage, die Lithium-Ionen aufnehmen und wieder abgeben können. Für die negative Elektrode eines erfindungsgemäßen Elektroden-Separator-Verbunds können beispielsweise Partikel auf Kohlenstoffbasis wie beispielsweise graphitischer Kohlenstoff eingesetzt werden. Als Aktivmaterialien für die positive Elektrode eignen sich beispielsweise Lithiumcobaltoxid (LiCoO₂), Lithiummanganoxid (LiMn₂O₄), Lithiumeisenphosphat (LiFePO₄) oder Derivate hiervon. Die elektrochemisch aktiven Materialien sind in der Regel in Partikelform in den Elektroden enthalten.

Die Aktivmaterialien sind in der Regel Hauptbestandteil einer Schicht, die auf den Stromkollektor aufgebracht ist. Der Stromkollektor stellt dabei eine elektrochemisch inaktive Komponente des Energiespeicherelements dar. Als Stromkollektoren sind insbesondere metallische Folien geeignet. Der Stromkollektor für die negative Elektrode (Anodenstromkollektor) einer Lithium-lonen-Zelle kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z.B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität besagter Schicht auf den Stromkollektoren und sorgt häufig auch für die Haftung der Schicht auf den Stromkollektoren. Übliche leitfähigkeitsverbessernde Additive sind Ruß, feine Grafite, Kohlenstoff-Fasern, Carbon-Nanotubes und Metallpulver.

Als Elektrolyten für Lithium-lonen-Zellen eignen sich vor allem Lösungen von Lithiumsalzen wie Lithiumhexafluorophosphat (LiPF₆) in organischen Lösungsmitteln (z. B. Ether und Ester der Kohlensäure).

Zellen mit Natrium-lonen-Technologie basieren bekanntlich auf dem Einsatz von Natrium, welches in Form von Ionen zwischen den Elektroden eines Energiespeicherelements hin und her wandern kann.

Für die Elektroden eines erfindungsgemäßen Elektroden-Separator-Verbunds auf Basis von Natrium-Ionen-Technologie kommen anodenseitig beispielsweise die folgenden Materialien in Frage:
- Kohlenstoff, besonders präferiert Hardcarbon (rein oder mit Stickstoff- und/oder Phosphor-Dotierung) oder Softcarbon oder Graphen-basierte Materialien (beispielsweise mit N-Dotierung); Kohlenstoff-Nanotubes, Graphit
- Polyanionen wie Na₂Ti₃O₇, Na₃Ti₂(PO₄)₃, TiP₂O₇, TiNb₂O₇, Na-Ti-(PO₄)₃, Na-V-(PO₄)₃
- Übergangsmetalloxide: V₂O₅, MnO₂, TiOz, NbzOs, Fe₂O₃, Na₂Ti₃O₇, NaCrTiO₄, Na₄Ti₅O₁₂

Kathodenseitig kommen beispielsweise die folgenden Materialien in Frage:
- Polyanionen: NaFePO₄ (Triphylit-Typ), Na₂Fe(P₂O₇), Na₄Fe₃(PO₄)₂(P₂O₇), Na₂FePO₄F, Na/Na₂[Fe_{1/2}Mn_{1/2}]PO₄F, Na₃V₂(PO₄)₂F₃, Na₃V₂(PO₄)₃, Na₄(CoMnNi)₃(PO₄)₂P₂O₇, NaCoPO₄, Na₂CoPO₄F
- Silikate: Na₂MnSiO₄, Na₂FeSiO₄
- Schichtoxide: NaCoO₂, NaFeO₂, NaNiO₂, NaCrO₂, NaVO₂, NaTiO₂, Na(FeCo)O₂, Na(Ni-FeCo)₃O₂, Na(NiFeMn)O₂, Na(NiFeCoMn)O₂, Na(NiMnCo)O₂

Daneben enthalten auch die Elektroden eines erfindungsgemäßen Elektroden-Separator-Verbunds auf der Basis von Natrium-Ionen bevorzugt einen Elektrodenbinder und/oder ein leitfähigkeitsverbesserndes und/oder sonstiges Additiv.

Besonders bevorzugt bestehen bei einer Natrium-Ionen-Energiespeicherzelle sowohl der Anoden- als auch der Kathodenstromkollektor aus Aluminium oder einer Aluminiumlegierung.

Energiespeicherelemente auf der Basis von Natrium-lonen-Technologie weisen vorzugsweise einen Elektrolyten mit mindestens einem Lösungsmittel und mindestens einem Leitsalz auf. Als Lösungsmittel kommen beispielsweise organische Carbonate, Ether, Nitrile und Mischungen daraus in Frage. Geeignete Leitsalze sind beispielsweise NaPF₆, Natrium-difluoro(oxalato)borat (NaBOB), NaBF₄, Natriumbis(fluorosulfonyl)imid (NaFSI), Natrium-2-trifluoromethyl-4,5-dicyanoimidazol (NaTDI), Natrium-bis(trifluoromethansulfonyl)imid (NaTFSI), NaAsF₆, NaBF₄, NaClO₄, NaB(C₂O₄)₂, NaP(C₆H₄O₂)₃; NaCF₃SO₃, Natriumtriflat (NaTf) und Et₄NBF₄.

Das Kontaktblechteil eines erfindungsgemäßen Elektroden-Separator-Verbunds zeichnet sich bevorzugt durch das folgende zusätzliche Merkmal aus:
a. Das Kontaktblechteil weist eine vorzugsweise gleichmäßige Dicke in einem Bereich von 50 µm bis 600 µm auf, insbesondere in einem Bereich von 100 µm bis 500 µm, vorzugsweise 200 µm oder 300 µm.

Eine Dicke des Kontaktblechteils von ca. 200 µm eignet sich insbesondere für eine Kontaktierung mit der Anode bzw. den negativen Elektroden und eine Dicke des Kontaktblechteils von ca. 300 µm eignet sich insbesondere für eine Kontaktierung mit der Kathode bzw. den positiven Elektroden.

In besonders bevorzugten Ausführungsformen des erfindungsgemäßen Elektroden-Separator-Verbunds zeichnet sich das Kontaktblechteil durch das folgende zusätzliche Merkmal aus:
a. Das Kontaktblechteil weist mindestens eine Sicke auf, die auf einer Flachseite des Kontaktblechteils als längliche Vertiefung und auf der gegenüberliegenden Flachseite als längliche Erhöhung ausgebildet ist, wobei das Kontaktblechteil mit der Flachseite, welche die längliche Erhöhung trägt, dem Elektroden-Separator-Verbund zugewandt ist.

Weiterhin kann sich der erfindungsgemäße Elektroden-Separator-Verbund in bevorzugten Ausführungsformen durch mindestens eines der folgenden zusätzlichen Merkmale auszeichnen:
a. Das Kontaktblechteil ist im Bereich der mindestens einen Sicke mit dem Elektroden-Separator-Verbund verschweißt.
b. Die Verschweißungen sind linienförmig.
c. Die Verschweißungen werden von zwei oder mehr parallelen Schweißlinien pro Sicke gebildet.

Vorzugsweise sind die vorgenannten Merkmale a. und b. und, besonders bevorzugt, die vorgenannten Merkmale a. bis c. in Kombination miteinander realisiert.

Durch eine Verschweißung des Kontaktblechteils im Bereich der mindestens einen Sicke mit einem aus einer Seite eines erfindungsgemäßen Elektroden-Separator-Verbunds austretenden Stromkollektorrand oder mehreren solcher Ränder kann die Stabilität der Verschweißung und allgemein der Schweißkontakt mit den Elektroden weiter verbessert werden.

Bevorzugt weist das Kontaktblechteil zwei oder drei oder mehr Sicken auf.

Es kann vorgesehen sein, dass ein zentraler Bereich des Kontaktblechteils eine Durchbrechung aufweist, beispielsweise in Form eines runden Lochs. Diese Durchbrechung in dem Kontaktblechteil kann beim Tränken des Elektroden-Separator-Verbunds mit einer Elektrolytflüssigkeit genutzt werden.

Es hat sich in einigen Ausführungsformen als vorteilhaft erwiesen, aus einer Seite des Elektroden-Separator-Verbunds herausragende Ränder von Stromkollektoren einer Vorbehandlung zu unterziehen, bevor das Kontaktblechteil aufgesetzt wird. Insbesondere kann in den Rand oder in die Ränder mindestens eine Vertiefung eingefalzt werden, deren Position zur Position der mindestens einen Sicke bzw. der länglichen Erhöhung auf der dem Elektroden-Separator-Verbund zugewandten Flachseite des Kontaktblechteils korrespondiert.

Der Rand des Stromkollektors oder die Ränder der Stromkollektoren kann oder können auch im Rahmen einer Vorbehandlung einer gerichteten Umformung unterzogen werden, beispielsweise einer Umbiegung in eine definierte Richtung.

Das Kontaktblechteil kann mit dem Anodenstromkollektor oder dem Kathodenstromkollektor des Elektroden-Separator-Verbunds elektrisch verbunden sein. Wie in der WO 2017/215900 A1 erläutert, hat die Verwendung eines Kontaktblechteils den Vorteil, dass die Elektroden entlang ihren jeweiligen Rändern mit dem Kontaktblechteil in Kontakt stehen. Hierdurch kann allgemein der Innenwiderstand des Energiespeicherelements gesenkt werden, so dass das Auftreten größer Ströme im Vergleich mit klassischen Energiespeicherelementen viel besser abgefangen werden kann.

Ein Kontaktblechteil, das zur elektrischen Verbindung mit einem Anodenstromkollektor des Elektroden-Separator-Verbunds, insbesondere eines für eine Lithium-Ionen-Zelle geeigneten Elektroden-Separator-Verbunds, vorgesehen ist, kann sich durch mindestens eines der folgenden Merkmale auszeichnen:
a. Das Kontaktblechteil besteht aus Nickel oder Kupfer oder Titan oder eine Nickel- oder Kupfer- oder Titanlegierung oder Edelstahl, beispielsweise vom Typ 1.4303 oder 1.4404 oder vom Typ SUS304, oder aus nickelplattiertem Kupfer.
b. Das Kontaktblechteil und der Anodenstromkollektor bestehen aus dem gleichen Material.

Ein Kontaktblechteil, das für eine elektrische Kontaktierung mit dem Kathodenstromkollektor des Elektroden-Separator-Verbunds, insbesondere eines für eine Lithium-Ionen-Zelle geeigneten Elektroden-Separator-Verbunds, vorgesehen ist, kann sich vorzugsweise durch mindestens eines der folgenden Merkmale auszeichnen:
a. Das Kontaktblechteil besteht aus Aluminium oder einer Aluminiumlegierung.
b. Das Kontaktblechteil und der Kathodenstromkollektor bestehen aus dem gleichen Material.

Als Aluminiumlegierungen kommen für das Kontaktblechteil beispielsweise Al-Legierungen vom Typ 1235, 1050, 1060, 1070, 3003, 5052, Mg3, Mg212 (Serie 3000) und GM55 in Frage. Weiterhin geeignet sind AlSi, AlCuTi, AlMgSi, AISiMg, AlSiCu, AlCuTiMg und AlMg. Der Aluminiumanteil besagter Legierungen liegt bevorzugt oberhalb von 99,5 %.

Weiterhin kann sich das Kontaktblechteil durch mindestens eines der unmittelbar folgenden Merkmale a. bis c. auszeichnen:
a. Das Kontaktblechteil weist zwei sich gegenüberliegenden Flachseiten auf und erstreckt sich im Wesentlichen nur in einer Dimension.
b. Das Kontaktblechteil ist eine Scheibe oder eine polygonale Platte.
c. Das Kontaktblechteil ist derart dimensioniert, dass es mindestens 40 % der Seite oder Stirnseite des Elektroden-Separator-Verbunds, an der es fixiert ist, bevorzugt mindestens 50 %, bevorzugt mindestens 60 %, bevorzugt mindestens 70 %, besonders bevorzugt mindestens 80 %, abdeckt.

Vorzugsweise sind die unmittelbar vorgenannten Merkmale a. und b. oder a. und c. oder b. und c. oder, besonders bevorzugt, die unmittelbar vorgenannten Merkmale a. bis c., in Kombination miteinander verwirklicht.

Die möglichst großflächige Abdeckung der Seite oder Stirnseite des Elektroden-Separator-Verbunds mit dem Kontaktblechteil ist für das thermische Management des Elektroden-Separator-Verbunds vorteilhaft. Je größer die Abdeckung ist, desto eher ist es möglich, möglichst lange Abschnitte der jeweiligen Elektroden zu kontaktieren. In dem Elektroden-Separator-Verbund gebildete Wärme kann so besonders gut über das Kontaktblechteil zu einem Gehäuse abgeführt werden.

Das Stützmaterial eines erfindungsgemäßen Elektroden-Separator-Verbunds zeichnet sich bevorzugt durch mindestens eines der unmittelbar folgenden Merkmale a. bis c. aus:
a. Bei dem Stützmaterial handelt es sich um ein keramisches Material.
b. Das Stützmaterial umfasst keramische Partikel und einen Binder.
c. Bei dem keramischen Material oder den keramischen Partikeln handelt es sich um Böhmit (AIO(OH) bzw. γ-AlOOH).

Bevorzugt sind keramische Materialien mit einem Schmelzpunkt, der oberhalb des Schmelzpunkts des jeweiligen Materials des Stromkollektors liegt, der von dem keramischen Material gestützt wird. Geeignet sind Carbide, Nitride, Oxide, Silicide oder Mischungen und Derivate dieser Verbindungen, insbesondere in Partikelform. In bevorzugten Ausführungsformen handelt es sich bei dem keramischen Material um Aluminiumoxid (Al₂O₃), um Titanoxid (TiO₂), um Titannitrid (TiN), um Titanaluminiumnitrid (TiAIN) oder um Titancarbonitrid (TiCN).

Alternativ zu dem keramischen Material kann das Stützmaterial auch ein glaskeramisches Material oder ein Glas sein. Mit dem Begriff "glaskeramisches Material" ist insbesondere ein Material gemeint, das kristalline Teilchen umfasst, die in eine amorphe Glasphase eingebettet sind.

Der Begriff "Glas" meint grundsätzlich jedes anorganische Glas, das den oben definierten Kriterien an thermische Stabilität genügt und das gegenüber einem gegebenenfalls anwesenden Elektrolyten chemisch stabil ist.

Erfindungsgemäß besonders bevorzugt ist das Stützmaterial gemäß dem unmittelbar vorstehenden Merkmal c. ausgebildet.

Bei dem Binder gemäß dem unmittelbar vorstehenden Merkmal b. handelt es sich bevorzugt um mindestens einen Binder aus der Gruppe der folgenden Verbindungen: Polytetrafluorethylen (PTFE), Polyvinylidenfluorid (PVDF), Polyamid (PA), Styrol-Butadien-Rubber (SBR), Carboxymethylzellulose (CMC), Hydrierter Acrylnitrilbutadien-Kautschuk (HNBR), Polyacrylsäure (PAA), Polymethacrylat (PMA), Polyacrylat (PA), Polyvinylacetat (PVA), Polyacrylnitril (PAN), Polyethylen (PE), Polyvinylpyrrolidon (PVP), Polyvinylbutyral (PVB), Polystyrol (PS), Polyurethan (PU).

Geeignet sind beispielsweise auch flurorierte Derivate der genannten Verbindungen.

Jedes Energiespeicherelement, das den oben beschriebenen Elektroden-Separator-Verbund umfasst, ist Gegenstand der vorliegenden Erfindung.

Besonders bevorzugt zeichnen sich erfindungsgemäße Energiespeicherelemente durch die folgenden Merkmale a. und b. aus:
a. Das Energiespeicherelement umfasst ein luft- und flüssigkeitsdicht verschlossenes Gehäuse, in dem der Elektroden-Separator-Verbund angeordnet ist.
b. Der Elektroden-Separator-Verbund ist über das Kontaktblechteil elektrisch mit einem Teil des Gehäuses oder einem durch das Gehäuse geführten elektrischen Pol verbunden

Das Gehäuse, in dem der Elektroden-Separator-Verbund angeordnet ist, ist bevorzugt ein luft- und flüssigkeitsdicht verschlossenes Gehäuse.

Das Energiespeicherelement kann ein prismatisches Gehäuse oder ein zylindrisches Gehäuse aufweisen. Im Falle eines prismatischen Gehäuses hat der Elektroden-Separator-Verbund bevorzugt die beschriebene prismatische oder im Wesentlichen prismatische Form. Im Falle eines zylindrischen Gehäuses hat der Elektroden-Separator-Verbund bevorzugt die beschriebene zylindrische oder im Wesentlichen zylindrische Form.

Das Gehäuse ist bevorzugt aus einem becherförmigen metallischen Gehäuseteil und einem zumindest teilweise aus Metall bestehenden Deckelteil gebildet. Das becherförmige Gehäuseteil kann beispielsweise in einem Tiefziehprozess gebildet sein. Es ist aber auch möglich, es beispielsweise durch Einschweißen eines Bodens in ein rohrförmiges Gehäuseteil herzustellen. Die beiden Gehäuseteile können über eine Dichtung miteinander verbunden sein, die elektrisch isolierende Eigenschaften hat und die beiden Gehäuseteile elektrisch voneinander isoliert. Es ist auch möglich, die beiden Gehäuseteile durch Verschweißung miteinander zu verbinden. In diesem Fall ist in der Regel ein gegen das Gehäuse isolierter metallischer Pol durch eine Durchbrechung im Gehäuse nach außen geführt.

Der elektrische und thermische Kontakt der Elektroden mit dem Gehäuse bzw. mindestens einem der Gehäuseteile erfolgt über das Kontaktblechteil. Das Kontaktblechteil selbst kann beispielsweise über einen Stromleiter oder über eine direkte Verschweißung mit einem Gehäuseteil oder gegebenenfalls dem metallischen Pol elektrisch verbunden werden.

Die Gehäuseteile können beispielsweise aus Aluminium, einer Aluminiumlegierung oder einem Stahlblech, beispielsweise einem vernickelten Stahlblech, bestehen. Geeignete Aluminiumlegierungen für das becherförmige metallische Gehäuseteil sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AISiMg, AlSiCu, AlCuTiMg und AlMg. Der Aluminiumanteil besagter Legierungen liegt bevorzugt oberhalb von 99,5%.

Die Erfindung umfasst weiterhin ein Verfahren zur Herstellung des beschriebenen Elektroden-Separator-Verbunds. Das Verfahren umfasst die folgenden Verfahrensschritte zur Herstellung einer Elektrode des Elektroden-Separator-Verbunds:
a. Aufbringen einer Schicht aus einem Elektrodenmaterial in einem Hauptbereich eines Stromkollektors, der eine Oberseite, eine Unterseite und einen Rand aufweist;
b. Aufbringen einer Schicht aus einem Stützmaterial in einem Randbereich des Stromkollektors, der sich streifenförmig entlang des Rands erstreckt und der nicht mit dem Elektrodenmaterial beladen ist, und
c. gegebenenfalls Kalandrieren des mit der Schicht aus dem Elektrodenmaterial und der Schicht aus dem Stützmaterial beschichteten Stromkollektors,
   wobei
d. die Schicht aus dem Elektrodenmaterial und die Schicht aus dem Stützmaterial derart gewählt und aufgebracht werden, dass die hergestellte Elektrode in dem Hauptbereich eine erste mittlere Dicke D1 und in dem Randbereich eine maximale Dicke D2 aufweist und D2 ≤ D1 ist.

Die endgültige Dicken D1 und D2 sowie ihr Verhältnis zueinander werden bestimmt durch die Menge des Stützmaterials und des Elektrodenmaterials, die pro Flächeneinheit aufgetragen werden, sowie die Komprimierbarkeit der Schichten bei dem fakultativen Schritt c., der Kalandrierung. Diese erfolgt in der Regel mittels Walzen, die einen Druck auf die Schichten ausüben und diese komprimieren. Die optimale Einstellung für diese Parameter kann in der Praxis durch Versuche problemlos bestimmt werden.

Auf die genannte Art können sowohl Anoden als auch Kathoden hergestellt und mit Separatoren in Folgeschritten zu erfindungsgemäßen Elektroden-Separator-Verbünden verarbeitet werden, wie dies weiter oben bereits erläutert wurde.

Besonders bevorzugt zeichnet sich das Verfahren durch mindestens eines der unmittelbar folgenden Merkmale a. bis g. aus:
a. Zum Aufbringen der Schicht aus dem Stützmaterial wird eine Suspension umfassend das Stützmaterial in partikulärer Form und ein Suspensionsmittel verwendet.
b. Das Suspensionsmittel umfasst mindestens eine Substanz aus der Gruppe mit Wasser, N-Methyl-Pyrrolidon (NMP) und Ethanol.
c. Die Suspension umfasst einen Binder.
d. Die Suspension umfasst das partikuläre Stützmaterial mit einem d50-Wert im Bereich von 0,2 µm bis 0,5 µm.
e. Die Suspension ist frei von Partikeln mit einer Partikelgröße > 2 µm.
f. Die Suspension umfasst Additive, die ihre Verarbeitungseigenschaften beeinflussen.
g. Die Suspension umfasst die folgenden Komponenten in den folgenden Anteilen:

| | |
|---|---|
| - Suspensionmittel | 40-90 Gew.-% |
| - Partikuläres Stützmaterial | 10-60 Gew.-% |
| - Binder | 1-20 Gew.-% |
| - Additive | 0-5 Gew.-% |

Die Komponenten in Merkmal g. ergänzen sich auf insgesamt 100 Gew.-%.

Nach dem Auftrag der Suspension auf den Stromkollektor muss das in der Suspension enthaltene Suspensionsmittel entfernt werde, beispielsweise mit Hilfe von Wärme und/oder Unterdruck. Danach folgt in der Regel besagter Kalandriervorgang.

Weitere Merkmale und Vorteile der Erfindung ergeben sich aus der nachfolgenden Beschreibung von bevorzugten Ausführungsbeispielen in Verbindung mit den Zeichnungen. In diesem Zusammenhang ist festzuhalten, dass die Merkmale der in den Ausführungsbeispielen dargestellten bevorzugten Ausführungsformen nicht zwingend miteinander verknüpft sind sondern auch unabhängig voneinander verwirklicht sein können.

### KURZBESCHREIBUNG DER ZEICHNUNGEN

In den Figuren zeigen schematisch:
- Fig. 1A: Querschnittsdarstellung des Stromkollektors einer Anode des erfindungsgemäßen Elektroden-Separator-Verbunds mit einer bevorzugter Ausführungsform der Beschichtung mit dem Stützmaterial (Variante 1);
- Fig. 1B: Querschnittsdarstellung des Stromkollektors einer Anode des erfindungsgemäßen Elektroden-Separator-Verbunds mit einer bevorzugter Ausführungsform der Beschichtung mit dem Stützmaterial (Variante 2);
- Fig. 1C: Querschnittsdarstellung des Stromkollektors einer Anode des erfindungsgemäßen Elektroden-Separator-Verbunds mit einer bevorzugter Ausführungsform der Beschichtung mit dem Stützmaterial (Variante 3);
- Fig. 1D: Querschnittsdarstellung des Stromkollektors einer Anode des erfindungsgemäßen Elektroden-Separator-Verbunds mit einer bevorzugter Ausführungsform der Beschichtung mit dem Stützmaterial (Variante 4);
- Fig. 2: Detailansicht der Ränder von Elektroden eines erfindungsgemäßen Elektroden-Separator-Verbunds (Querschnittsdarstellung);
- Fig. 3: Längsschnitt durch ein erfindungsgemäßes Energiespeicherelement mit einem erfindungsgemäßen Elektroden-Separator-Verbund mit Kontaktblechteilen; und
- Fig. 4: Ausführungsform des erfindungsgemäßen Elektroden-Separator-Verbunds sowie dessen Komponenten.

### DETAILLIERTE BESCHREIBUNG DER AUSFÜHRUNGSBEISPIELE

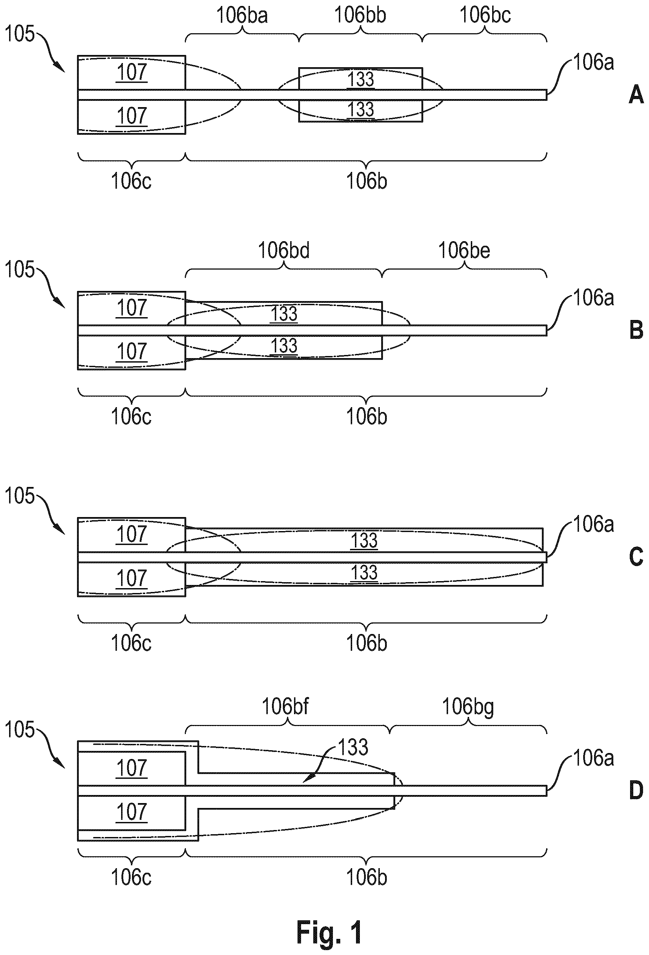

Der in **Fig. 1A** dargestellte Stromkollektor 106 einer Anode 105 umfasst einen Randbereich 106b, der beidseitig mit einer Schicht aus einem Stützmaterial 133 beschichtet ist, und einen Hauptbereich 106c, der beidseitig mit einer Schicht aus einem Elektrodenmaterial 107 beschichtet ist. Der Randbereich 106b ist unterteilt in einen ersten streifenförmigen Teilbereich 106ba, der frei von dem Stützmaterial 133 ist, einen zweiten streifenförmigen Teilbereich 106bb, der beidseitig mit dem Stützmaterial 133 beschichtet ist, und einen dritten streifenförmigen Teilbereich 106bc, der ebenfalls frei von dem Stützmaterial 133 ist. Der dritte streifenförmige Teilbereich 106bc ist ein endständiger streifenförmigen Teilbereich und der erste streifenförmige Teilbereich 106ba grenzt unmittelbar an den Hauptbereich 106c des Stromkollektors an und der zweite Teilbereich 106bb trennt den ersten streifenförmigen Teilbereich 106ba von dem zweiten streifenförmigen Teilbereich 106bb.

In der Praxis sind in vielen Ausführungsformen der beschriebene Hauptbereich 106c, der beschriebene Randbereich 106b und die die beschriebenen Teilbereiche 106ba, 106bb und 106bc nicht so scharf voneinander abgegrenzt, wie das in der Zeichnung dargestellt ist. Ein möglicher Verlauf der jeweiligen Bereichsgrenzen ist durch gestrichelte Linien dargestellt.

Der in **Fig. 1B** dargestellte Stromkollektor 106 einer Anode 105 umfasst einen Randbereich 106b, der beidseitig mit einer Schicht aus einem Stützmaterial 133 beschichtet ist, und einen Hauptbereich 106c, der beidseitig mit einer Schicht aus einem Elektrodenmaterial 107 beschichtet ist. Der Randbereich 106b ist dabei lediglich bereichsweise mit der Schicht aus dem Stützmaterial 133 beschichtet. Er ist unterteilt in einen ersten streifenförmigen Teilbereich 106bd, der beidseitig mit dem Stützmaterial 133 beschichtet ist, und einen zweiten streifenförmigen Teilbereich 106be, der frei von dem Stützmaterial ist. Der zweite streifenförmige Teilbereich 106be ist ein endständiger streifenförmiger Teilbereich und der erste streifenförmige Teilbereich 106bd grenzt unmittelbar an den Hauptbereich 106c des Stromkollektors an und trennt den Hauptbereich 106c von dem zweiten streifenförmigen Teilbereich 106be.

In der Praxis sind in vielen Ausführungsformen der beschriebene Hauptbereich 106c, der beschriebene Randbereich 106b und die die beschriebenen Teilbereiche 106bd und 106be nicht so scharf voneinander abgegrenzt, wie das in der Zeichnung dargestellt ist. Ein möglicher Verlauf der jeweiligen Bereichsgrenzen ist durch gestrichelte Linien dargestellt.

Der in **Fig. 1C** dargestellte Stromkollektor 106 einer Anode 105 umfasst einen Randbereich 106b, der beidseitig mit einer Schicht aus einem Stützmaterial 133 beschichtet ist, und einen Hauptbereich 106c, der beidseitig mit einer Schicht aus einem Elektrodenmaterial 107 beschichtet ist. Der Randbereich 106b ist dabei vollständig und beidseitig mit der Schicht aus dem Stützmaterial 133 beschichtet.

In der Praxis sind in vielen Ausführungsformen der beschriebene Hauptbereich 106c und der beschriebene Randbereich 106b nicht so scharf voneinander abgegrenzt, wie das in der Zeichnung dargestellt ist. Stattdessen kann es zu Überlappungen kommen. Ein möglicher Verlauf der jeweiligen Bereichsgrenzen ist durch gestrichelte Linien dargestellt.

Der in **Fig. 1D** dargestellte Stromkollektor 106 einer Anode 105 umfasst einen Randbereich 106b, der beidseitig mit einer Schicht aus einem Stützmaterial 133 beschichtet ist, und einen Hauptbereich 106c, der beidseitig mit einer Schicht aus einem Elektrodenmaterial 107 beschichtet ist. Der Randbereich 106b ist teilweise mit der Schicht aus dem Stützmaterial 133 beschichtet. Er ist unterteilt in einen ersten streifenförmigen Teilbereich 106bf, der beidseitig mit dem Stützmaterial 133 beschichtet ist, und einen zweiten streifenförmigen Teilbereich 106bg, der frei von dem Stützmaterial 133 ist. Der zweite streifenförmige Teilbereich 106bg ist ein endständiger streifenförmiger Teilbereich und der erste streifenförmige Teilbereich 106bf grenzt unmittelbar an den Hauptbereich 106c des Stromkollektors an und trennt den Hauptbereich 106c von dem zweiten streifenförmigen Teilbereich 106bg. Weiterhin ist auch der Hauptbereich 106c vollständig mit der elektrisch nichtleitenden Schicht aus dem Stützmaterial 133 beschichtet.

In der Praxis sind in vielen Ausführungsformen der beschriebene Hauptbereich 106c, der beschriebene Randbereich 106b und die die beschriebenen Teilbereiche 106bf und 106bg nicht so scharf voneinander abgegrenzt, wie das in der Zeichnung dargestellt ist. Ein möglicher Verlauf der jeweiligen Bereichsgrenzen ist durch gestrichelte Linien dargestellt.

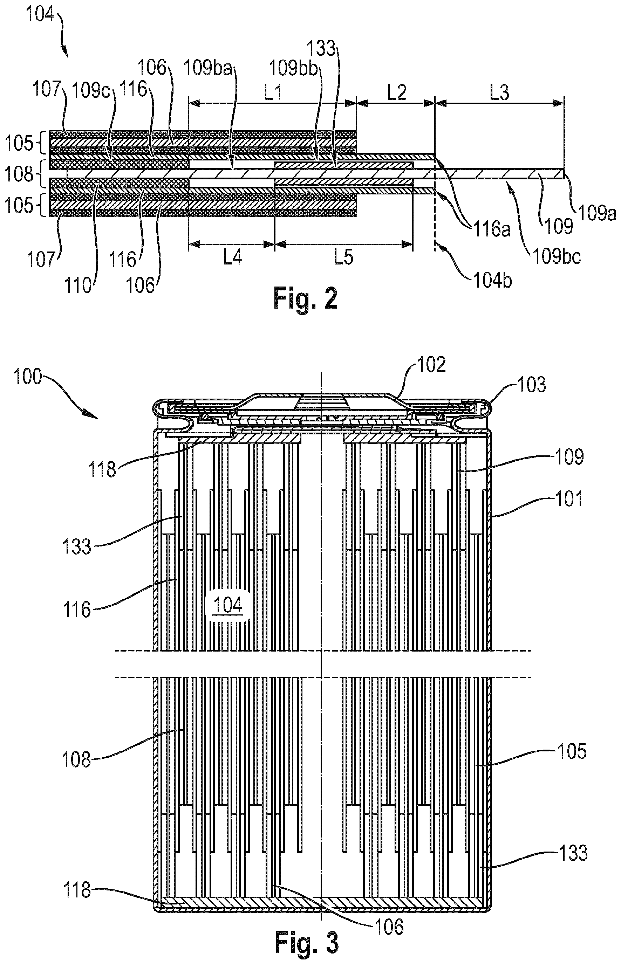

**Fig.** 2 zeigt die Ränder von Elektroden eines erfindungsgemäßen Elektroden-Separator-Verbunds. Zwischen zwei Anoden 105 ist eine Kathode 108 angeordnet, die über die Separatoren 116 oder den Separator 116 mit den Anoden verbunden ist. Die Anoden 105 umfassen jeweils einen Anodenstromkollektor 106, der beidseitig mit einem Elektrodenmaterial 107 beschichtet ist. Bei den Anodenstromkollektoren 106 handelt es sich um Kupferfolien. Die Kathode 108 umfasst einen Kathodenstromkollektor 109, bei dem es sich um eine dünne Aluminiumfolie handelt. Die Ränder 116a der Separatoren oder des Separators liegen in einer Ebene, aus der der Rand 109a des Stromkollektors 109 austritt. Diese Ebene ist vorliegend als Stirnseite 104b definiert. Der stirnseitige Überstand des Stromkollektors 109 hat vorliegend die Länge L3.

Der Kathodenstromkollektor 109 umfasst einen Hauptbereich 109c, der beidseitig mit einer Schicht aus positivem Elektrodenmaterial 110 beladen ist, sowie einen Randbereich 109b, der sich streifenförmig entlang des Rands 109a erstreckt und der nicht mit dem Elektrodenmaterial 110 beladen ist. Der Randbereich 109b ist unterteilt in die drei streifenförmigen, unmittelbar benachbarten Teilbereiche 109ba, 109bb und 109bc, wobei der Teilbereich 109ba frei von dem Stützmaterial 133 ist, der Teilbereich 109bb beidseitig mit dem Stützmaterial 133 beschichtet ist, und der Teilbereich 109bc ebenfalls frei von dem Stützmaterial 133 ist.

Hervorzuheben ist, dass die Separatoren 116 oder der Separator 116 gegenüber den negativen Elektroden 105 einen Überstand der Länge L2 aufweisen / aufweist, um zu vermeiden, dass es in den Randbereichen der Elektroden 105 zu einem unmittelbaren Kontakt mit der Kathode 106 kommt.

Weiterhin hervorzuheben ist, dass die negativen Elektroden einen Überstand L1 gegenüber dem Hauptbereich 109c aufweisen. In der Folge überlappen sie in Richtung senkrecht zum Stromkollektor 109 vollständig mit dem Teilbereich 109ba, der vorliegend die bevorzugte Länge L4 aufweist.

Weiterhin hervorzuheben ist, dass der Teilbereich 109bb, der vorliegend die bevorzugte Länge L5 aufweist, in Richtung senkrecht zum Stromkollektor 109 vollständig mit den Separatoren 116 oder dem Separator 116 überlappt. Lediglich ein Teil des Teilbereichs 109bb überlappt in Richtung senkrecht zum Stromkollektor 109 mit den Elektroden 105.

Bevorzugte Werte für die Längen L1 bis L5 lauten wie folgt:
L1 = 0,5 mm bis 1,5 mm
L2 = 0,25 mm bis 1,25 mm
L3 = 0,75 mm bis 1,75 mm
L4 = 0,1 mm bis 0,9 mm
L5 = 0,5 mm bis 1,5 mm

**Fig. 3** zeigt ein Beispiel eines erfindungsgemäßen Energiespeicherelements 100 mit einem erfindungsgemäßen Elektroden-Separator-Verbund 104. Das Energiespeicherelement 100 umfasst ein luft- und flüssigkeitsdicht verschlossenes Gehäuse, in dem der Elektroden-Separator-Verbund 104 angeordnet ist. Das Gehäuse umfasst ein becherförmiges metallisches Gehäuseteil 101 und einen Gehäusedeckel 102, zwischen denen die elektrisch isolierende Dichtung 103 angeordnet ist. Der Elektroden-Separator-Verbund 104 hat die Form eines Wickels und umfasst die Anode 105 und die Kathode 108 und den Separator 116 in jeweils bandförmiger Form sowie spiralförmig gewickelt. Der Elektroden-Separator-Verbund 104 ist über die metallischen Kontaktblechteile 117 und 118 elektrisch dem Gehäuse verbunden. Über das Kontaktblechteil 117 ist die Anode 105 mit dem Boden des becherförmigen Gehäuseteil 101 verbunden, das entsprechend als negativer Pol des Energiespeicherelements 100 fungiert. Über das Kontaktblechteil 118 ist die Kathode 108 mit dem Deckel 102 verbunden, der entsprechend als positiver Pol des Energiespeicherelements 100 fungiert.

Die Kontaktblechteile 117 und 118 sind mit den Längsrändern der Stromkollektoren 106 und 109 verschweißt. Die Stromkollektoren 106 und 109 sind bandförmig ausgebildet und umfassen jeweils einen mit dem Stützmaterial 133 beschichteten streifenförmigen Randbereich 106b und 109b

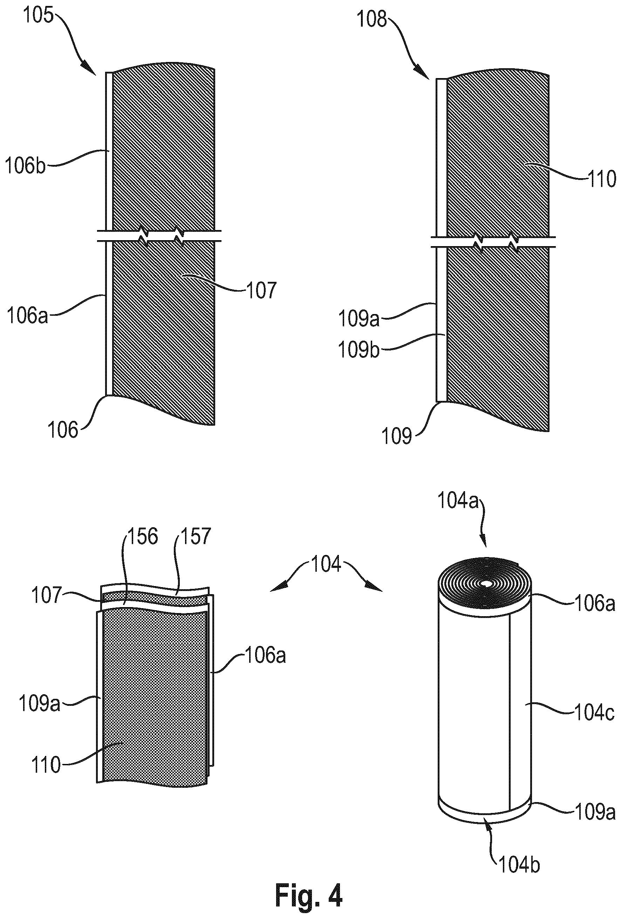

**Fig. 4** veranschaulicht den Aufbau eines Elektroden-Separator-Verbunds 104, der Bestandteil eines erfindungsgemäßen Energiespeicherelements sein kann. Der Verbund 104 umfasst die bandförmige Anode 105 mit dem bandförmigen Anodenstromkollektor 106, der einen ersten Längsrand 106a und einen dazu parallelen zweiten Längsrand aufweist. Bei dem Anodenstromkollektor 106 handelt es sich bevorzugt um eine Folie aus Kupfer oder Nickel. Diese umfasst einen bandförmigen Hauptbereich, der mit einer Schicht aus negativem Elektrodenmaterial 107 beladen ist, sowie einen freien Randstreifen 106b, der sich entlang seines ersten Längsrands 106a erstreckt und der nicht mit dem Elektrodenmaterial 107 sondern stattdessen mit dem Stützmaterial 133 beladen ist. Weiterhin umfasst der Verbund 104 die bandförmige Kathode 108 mit dem bandförmigen Kathodenstromkollektor 109, der einen ersten Längsrand 109a und einen dazu parallelen zweiten Längsrand aufweist. Bei dem Kathodenstromkollektor 109 handelt es sich bevorzugt um eine Aluminiumfolie. Er umfasst einen bandförmigen Hauptbereich, der mit einer Schicht aus positivem Elektrodenmaterial 110 beladen ist, sowie einen freien Randstreifen 109b, der sich entlang seines ersten Längsrands 109a erstreckt und der nicht mit dem Elektrodenmaterial 110 sondern mit dem Stützmaterial 133 beladen ist. Beide Elektroden sind einzeln in ungewickeltem Zustand dargestellt.

Die Anode 105 und die Kathode 108 sind innerhalb des Elektroden-Separator-Verbunds 104 versetzt zueinander angeordnet, so dass der erste Längsrand 106a des Anodenstromkollektors 106 aus der ersten endständigen Stirnseite 104a und der erste Längsrand 109a des Kathodenstromkollektors 109 aus der zweiten endständigen Stirnseite 104b des Elektroden-Separator-Verbunds 104 austritt. Die versetzte Anordnung geht aus der Darstellung links unten hervor. Dort sind auch die zwei bandförmigen Separatoren 156 und 157 dargestellt, die im Wickel die Elektroden 105 und 108 voneinander trennen.

In der Darstellung rechts unten ist der Elektroden-Separator-Verbunds 104 in gewickelter Form dargestellt, wie er in einem Energiespeicherelement gemäß Figur 1 zum Einsatz kommen kann. Die aus den Stirnseiten 104a und 104b austretenden Elektrodenränder 106a und 109a sind gut zu erkennen. Der Wickelmantel 104c wird bevorzugt durch eine Kunststofffolie gebildet.

## Patentansprüche

1. Elektroden-Separator-Verbund (104) für ein elektrochemisches Energiespeicherelement (100) mit den folgenden Merkmalen:
a. Der Verbund (104) umfasst als Elektroden mindestens eine Anode (105) und mindestens eine Kathode (108) sowie mindestens einen Separator (116) oder mindestens einen Festelektrolyten mit der Sequenz Anode (105) / Separator (116) oder Festelektrolyt / Kathode (108).
b. Die Anode (105) umfasst einen Anodenstromkollektor (106), bei dem es sich um ein dünnes, elektrisch leitendes Substrat handelt, das eine Oberseite, eine Unterseite und einen Rand (106a) aufweist.
c. Die Kathode (108) umfasst einen Kathodenstromkollektor (109), bei dem es sich um ein dünnes, elektrisch leitendes Substrat handelt, das eine Oberseite, eine Unterseite und einen Rand (109a) aufweist.
d. Der Anodenstromkollektor (106) umfasst einen Hauptbereich (106c), der beidseitig mit einer Schicht aus negativem Elektrodenmaterial (107) beladen ist, sowie einen Randbereich (106b), der sich streifenförmig entlang des Rands (106a) erstreckt und der nicht mit dem negativen Elektrodenmaterial (107) beladen ist,
und/oder
der Kathodenstromkollektor (109) umfasst einen Hauptbereich (109c), der beidseitig mit einer Schicht aus positivem Elektrodenmaterial (110) beladen ist, sowie einen Randbereich (109b), der sich streifenförmig entlang des Randes (109a) erstreckt und der nicht mit dem positiven Elektrodenmaterial (110) beladen ist.
e. Der Verbund (104) weist eine Seite (104a oder 104b) auf, aus der der Rand (106a) des Anodenstromkollektors (106) oder der Rand (109a) des Kathodenstromkollektors (109) austritt.
f. Der sich entlang des aus der Seite (104a oder 104b) austretenden Rands (106a oder 109a) erstreckende Randbereich (106b oder 109b) ist teilweise oder vollständig mit einer elektrisch nichtleitenden Schicht aus einem Stützmaterial (133) beschichtet.
g. Die Elektrode, deren Stromkollektor den aus der Seite (104a oder 104b) austretenden Rand (106a oder 109a) umfasst, weist in dem Hauptbereich (106c oder 109c) ihres Stromkollektors eine erste mittlere Dicke D1 und in dem mit der Schicht aus dem Stützmaterial beschichteten Randbereich (106b oder 109b) eine maximale Dicke D2 auf.
h. D2 < D1.

2. Elektroden-Separator-Verbund (104) nach Anspruch 1 mit mindestens einem der folgenden zusätzlichen Merkmale:
a. Der sich entlang des aus der Seite (104a oder 104b) austretenden Rands erstreckende Randbereich (106b oder 109b) ist teilweise mit der Schicht aus dem Stützmaterial (133) beschichtet.
b. Der sich entlang des aus der Seite (104a oder 104b) austretenden Rands erstreckende Randbereich (106b oder 109b) ist unterteilt in einen ersten streifenförmigen Teilbereich (106ba), der frei von dem Stützmaterial (133) ist, einen zweiten streifenförmigen Teilbereich (106bb), der beidseitig mit dem Stützmaterial (133) beschichtet ist, und einen dritten streifenförmigen Teilbereich (106bc), der ebenfalls frei von dem Stützmaterial (133) ist.
c. Der dritte streifenförmige Teilbereich (106bc) ist ein endständiger streifenförmigen Teilbereich und der erste streifenförmige Teilbereich (106ba) grenzt unmittelbar an den Hauptbereich (106c) des Stromkollektors an und der zweite Teilbereich (106bb) trennt den ersten streifenförmigen Teilbereich (106ba) von dem zweiten streifenförmigen Teilbereich (106bb).

3. Elektroden-Separator-Verbund (104) nach Anspruch 1 mit mindestens einem der folgenden zusätzlichen Merkmale:
a. Der sich entlang des aus der Seite (104a oder 104b) austretenden Rands erstreckende Randbereich (106b oder 109b) ist teilweise mit der Schicht aus dem Stützmaterial (133) beschichtet.
b. Der sich entlang des aus der Seite (104a oder 104b) austretenden Rands erstreckende Randbereich (106b oder 109b) ist unterteilt in einen ersten streifenförmigen Teilbereich (106bd), der beidseitig mit dem Stützmaterial (133) beschichtet ist, und einen zweiten streifenförmigen Teilbereich (106be), der frei von dem Stützmaterial ist.
c. Der zweite streifenförmige Teilbereich (106be) ist ein endständiger streifenförmiger Teilbereich und der erste streifenförmige Teilbereich (106bd) grenzt unmittelbar an den Hauptbereich (106c) des Stromkollektors an und trennt den Hauptbereich (106c) von dem zweiten streifenförmigen Teilbereich (106be).

4. Elektroden-Separator-Verbund (104) nach Anspruch 1 mit mindestens einem der folgenden zusätzlichen Merkmale:
a. Der sich entlang des aus der Seite (104a oder 104b) austretenden Rands erstreckende Randbereich (106b oder 109b) ist vollständig mit der Schicht aus dem Stützmaterial (133) beschichtet.
b. Der sich entlang des aus der Seite (104a oder 104b) austretenden Rands erstreckende Randbereich (106b oder 109b) ist beidseitig mit der Schicht aus dem Stützmaterial (133) beschichtet.

5. Elektroden-Separator-Verbund (104) nach Anspruch 1 mit mindestens einem der folgenden zusätzlichen Merkmale:
a. Der sich entlang des aus der Seite (104a oder 104b) austretenden Rands erstreckende Randbereich (106b oder 109b) ist teilweise mit der Schicht aus dem Stützmaterial (133) beschichtet.
b. Der sich entlang des aus der Seite (104a oder 104b) austretenden Rands erstreckende Randbereich (106b oder 109b) ist unterteilt in einen ersten streifenförmigen Teilbereich (106bf), der beidseitig mit dem Stützmaterial (133) beschichtet ist, und einen zweiten streifenförmigen Teilbereich (106bg), der frei von dem Stützmaterial (133) ist.
c. Der zweite streifenförmige Teilbereich (106bg) ist ein endständiger streifenförmiger Teilbereich und der erste streifenförmige Teilbereich (106bf) grenzt unmittelbar an den Hauptbereich (106c) des Stromkollektors an und trennt den Hauptbereich (106c) von dem zweiten streifenförmigen Teilbereich (106bg).
d. Der Hauptbereich (106c) ist teilweise oder vollständig mit der elektrisch nichtleitenden Schicht aus dem Stützmaterial (133) beschichtet.

6. Elektroden-Separator-Verbund (104) nach einem der vorhergehenden Ansprüche mit mindestens einem der folgenden zusätzlichen Merkmale:
a. Der Elektroden-Separator-Verbund (104) hat die Form eines Wickels und umfasst die Anode (105) und die Kathode (108) und den mindestens einen Separator (116) oder die mindestens eine Schicht aus dem Festelektrolyten in jeweils bandförmiger Form sowie spiralförmig gewickelt.
b. Der wickelförmige Elektroden-Separator-Verbund (104) weist eine erste und eine zweite Stirnseite (104a, 104b) und einen dazwischen liegenden Wickelmantel (104c) auf.
c. Der Anodenstromkollektor (106) ist bandförmig ausgebildet und umfasst parallel nebeneinander seinen Hauptbereich (106c) und den Randbereich (106b), wobei der Hauptbereich (106c) wie der Randbereich (106b) streifenförmig ausgebildet ist.
d. Der Kathodenstromkollektor (109) ist bandförmig ausgebildet und umfasst parallel nebeneinander seinen Hauptbereich (109c) und den Randbereich (109b), wobei der Hauptbereich (109c) wie der Randbereich (109b) streifenförmig ausgebildet ist.
e. Aus einer der Stirnseiten (104a) tritt der Rand (106a) des Anodenstromkollektors (106) aus, und aus der anderen der Stirnseiten (104b) der Rand (109a) des Kathodenstromkollektors (109).
f. An der ersten und/oder der zweiten Stirnseite (104a, 104b) ist ein metallisches Kontaktblechteil (117, 118) fixiert.
g. Das metallische Kontaktblechteil (117) oder die metallischen Kontaktblechteile (117, 118) sind mit dem aus der jeweiligen Stirnseite (104a, 104b) austretenden Rand (106a, 106b) oder den aus der jeweiligen Stirnseite austretenden Rändern verschweißt.

7. Elektroden-Separator-Verbund (104) nach einem der Ansprüche 1 bis 5 mit mindestens einem der folgenden zusätzlichen Merkmale:
a. Der Elektroden-Separator-Verbund (104) umfasst mehrere Anoden (105) und mehrere Kathoden (108) in gestapelter Form, wobei in dem Stapel benachbarte Elektroden entgegengesetzter Polarität durch den mindestens einen Separator (116) oder die mindestens eine Schicht aus dem Festelektrolyten getrennt sind.
b. Die Anodenstromkollektoren (106) der Anoden (105) umfassen jeweils den Hauptbereich (106c), der beidseitig mit einer Schicht aus dem negativen Elektrodenmaterial (107) beladen ist, sowie den Randbereich (106b), der sich streifenförmig entlang des Rands (106a) erstreckt und der nicht mit dem negativen Elektrodenmaterial (107) beladen ist.
c. Die Kathodenstromkollektoren (109) der Kathoden (108) umfassen jeweils den Hauptbereich (109c), der beidseitig mit einer Schicht aus dem positivem Elektrodenmaterial (110) beladen ist, sowie den Randbereich (109b), der sich streifenförmig entlang des Randes (109a) erstreckt und der nicht mit dem positiven Elektrodenmaterial (110) beladen ist.
d. Der Stapel ist prismatisch ausgebildet und weist eine erste Seite auf, aus der die Ränder (106a) der Anodenstromkollektoren (106) austreten, und eine zweite Seite, aus der die Ränder (109a) der Kathodenstromkollektoren (109) austreten.
e. An der ersten und/oder der zweiten Seite ist ein metallisches Kontaktblechteil (117, 118) fixiert.
f. Das metallische Kontaktblechteil (117, 118) oder die metallischen Kontaktblechteile sind mit den aus der jeweiligen Seite austretenden Rändern (106a, 109a) verschweißt.

8. Elektroden-Separator-Verbund (104) nach einem der vorhergehenden Ansprüche mit mindestens einem der folgenden zusätzlichen Merkmale:
a. Bei dem Stützmaterial (133) handelt es sich um ein keramisches Material.
b. Das Stützmaterial (133) umfasst keramische Partikel und einen Binder.
c. Bei dem keramischen Material oder den keramischen Partikeln handelt es sich um Böhmit (AIO(OH) bzw. γ-AlOOH).

9. Energiespeicherelement (100), umfassend einen Elektroden-Separator-Verbund (104) nach einem der vorhergehenden Ansprüche.

10. Energiespeicherelement nach Anspruch 9 mit mindestens einem der folgenden zusätzlichen Merkmale:
a. Das Energiespeicherelement (100) umfasst ein luft- und flüssigkeitsdicht verschlossenes Gehäuse, in dem der Elektroden-Separator-Verbund (104) angeordnet ist.
b. Der Elektroden-Separator-Verbund (104) ist über das Kontaktblechteil (117, 118) elektrisch mit einem Teil des Gehäuses oder einem durch das Gehäuse geführten elektrischen Pol verbunden.

11. Verfahren zur Herstellung des Elektroden-Separator-Verbunds nach einem der Ansprüche 1 bis 8 unter Herstellung einer Elektrode mit den folgenden Verfahrensschritten:
a. Aufbringen einer Schicht aus einem Elektrodenmaterial (107, 110) in einem Hauptbereich (106c, 109c) eines Stromkollektors (106, 109), der eine Oberseite, eine Unterseite und einen Rand aufweist;
b. Aufbringen einer Schicht aus einem Stützmaterial in einem Randbereich des Stromkollektors, der sich streifenförmig entlang des Rands (106a) erstreckt und der nicht mit dem Elektrodenmaterial beladen ist, und
c. gegebenenfalls Kalandrieren des mit der Schicht aus dem Elektrodenmaterial und der Schicht aus dem Stützmaterial beschichteten Stromkollektors,
wobei
d. die Schicht aus dem Elektrodenmaterial (107, 110) und die Schicht aus dem Stützmaterial (133) derart gewählt und aufgebracht werden, dass die hergestellte Elektrode in dem Hauptbereich (106c, 109c) eine erste mittlere Dicke D1 und in dem Randbereich (106b, 109b) eine maximale Dicke D2 aufweist und D2 ≤ D1 ist.

12. Verfahren nach Anspruch 11 mit mindestens einem der folgenden zusätzlichen Merkmale:
a. Zum Aufbringen der Schicht aus dem Stützmaterial (133) wird eine Suspension umfassend das Stützmaterial (133) in partikulärer und/oder gelöster Form und ein Suspensionsmittel verwendet.
b. Das Suspensionsmittel umfasst mindestens eine Substanz aus der Gruppe mit Wasser, N-Methyl-Pyrrolidon (NMP) und Ethanol.
c. Die Suspension umfasst einen Binder.
d. Die Suspension umfasst das partikuläre Stützmaterial (133) mit einem d50-Wert im Bereich von 0,2 µm bis 0,5 µm.
e. Die Suspension ist frei von Partikeln mit einer Partikelgröße > 2 µm.
f. Die Suspension umfasst Additive, die ihre Verarbeitungseigenschaften beeinflussen.
g. Die Suspension umfasst die folgenden Komponenten in den folgenden Anteilen:
| | |
|---|---|
| - Suspensionmittel | 40-90 Gew.-% |
| - Partikuläres Stützmaterial | 10-60 Gew.-% |
| - Binder | 1-5 Gew.-% |
| - Additive | 0-5 Gew.-% |
(Die Komponenten ergänzen sich auf 100 Gew.-%)
